# EUROPÄISCHE PATENTSCHRIFT

(11) **EP 1 358 571 B1**
(45) Veröffentlichungstag und Bekanntmachung des Hinweises auf die Patenterteilung: **16.07.2008**
(21) Anmeldenummer: 02706608.3
(22) Anmeldetag: 21.01.2002
(51) Int. Cl.: G06F 15/78

(54) **DATENVERARBEITUNGSVORRICHTUNG**
DATA PROCESSING DEVICE
DISPOSITIF DE TRAITEMENT DE DONNEES

(30) Priorität: 09.02.2001 DE 10105987
(43) Veröffentlichungstag der Anmeldung: 05.11.2003
(73) Patentinhaber: Infineon Technologies AG, 81669 München (DE)
(72) Erfinder: HORVAT, Helmut, A-8042 Graz (AT); OTTERSTEDT, Jan, 82008 Unterhaching (DE); WALLSTAB, Stefan, 81739 München (DE)
(74) Vertreter: Epping - Hermann - Fischer
(86) Internationale Anmeldenummer: PCT/DE2002/000176
(87) Internationale Veröffentlichungsnummer: WO 2002/065323

(56) Entgegenhaltungen:
- EP-A- 0 895 164
- WO-A-98/08306
- US-A- 5 533 123
- US-A- 5 784 577

## Beschreibung

Die Erfindung betrifft eine Datenverarbeitungsvorrichtung mit einer funktionsprogrammierbaren Logikschaltung mit einer Programmierschnittstelle und einer Berechtigungskontrolleinheit, durch die die Programmierschnittstelle vor einem unberechtigten Zugriff geschützt ist.

Integrierte Halbleiterbausteine lassen sich an kundenspezifische Anforderungen anpassen, indem die betroffenen Funktionen über eine Software realisiert werden. Diese ist verhältnismäßig einfach an die speziellen Wünsche anpaßbar. Softwarelösungen sind aber relativ langsam im Vergleich zu einer hardwaretechnischen Realisierung. Eine weitere bekannte Möglichkeit sind funktionsprogrammierbare Logikschaltungen, die beispielsweise als FPGAs (Field Programmable Gate Array) bekannt sind. Diese bieten aber keine oder nur ungenügende Sicherungen gegen unbefugten Zugriff. Das ist jedoch für den Einsatz in vielen Chipkarten und Sicherheits-ICs erforderlich.

Aus der DE 197 53 730 A1 ist eine Vorrichtung zum Steuern einer Brennkraftmaschine bekannt, bei der vor der Ausführung von Befehlen auf einem Mikroprozessor eine Berechtigungsüberprüfung vorgesehen ist. Allerdings ist eine solche Vorrichtung bei funktionsprogrammierbaren Logikschaltungen nicht anwendbar, da die Logikschaltung selber die ausführende Komponente ist.

Ferner ist aus der DE 196 39 033 C1 ein Analysierschutz für einen Halbleiterchip bekannt, bei dem eine Abdeckung des Chips und eine Manipulationsdetektionsschaltung zur Feststellung einer Entfernung der Abdeckung vorgesehen sind.

Aus der US-A-5784577 ist eine Datenverarbeitungsvorrichtung mit einer funktionsprogrammierbaren Logikschaltung mit einer Programmierschnittstelle bekannt, bei der eine Berechtigungsprüfung vorgesehen ist. Um eine Neuprogrammierung vorzunehmen, muß ein Benutzer ein Paßwort eingeben.

Aufgabe der Erfindung ist es daher, eine Datenverarbeitungvorrichtung anzugeben, die einfache Möglichkeiten zur Änderung der Funktion vorsieht, aber trotzdem eine schnelle Datenverarbeitung ermöglicht und hohe Sicherheitsanforderungen erfüllt.

Diese Aufgabe wird durch eine Datenverarbeitungsvorrichtung der eingangs genannten Art gelöst, die dadurch gekennzeichnet ist, daß ein Programmierbefehl vorgesehen ist, der mit einem Datensignal in einer Austastlücke an die Programmierschnittstelle übertragbar ist, um eine Reprogrammierung der funktionsprogrammierbaren Logikschaltung durchzuführen.

Die Datenverarbeitungvorrichtung ist also nicht nur programmierbar, sondern es werden auch weitere Maßnahmen vorgesehen, um eine Reprogrammierung durch Unberechtigte zu verhindern. Vorteilhafterweise geschieht dies so, daß die Berechtigungskontrollvorrichtung mit der funktionsprogrammierbaren Logikschaltung und der Programmierschnittstelle in einer Einheit realisiert ist. So kann eine Manipulationsdetektionsvorrichtung vorgesehen werden, die Software- und vor allem Hardwareattacken entdeckt sowie entsprechende Reaktionen, beispielsweise eine Meldung an eine Zentrale oder die Löschung sicherheitsrelevanter Daten, auslösen kann.

In einer vorteilhaften Ausgestaltung der Erfindung ist die Berechtigungskontrolleinheit durch einen Mikroprozessor realisiert, der auch für andere Aufgaben einsetzbar ist. Dadurch können durch die erfindungsgemäße Datenverarbeitungsvorrichtung komplexe Aufgaben bewältigt werden. Ein Einsatzgebiet hierfür ist der Einsatz als Chipkarte für Pay-TV-Anwendungen.

Die Erfindung wird nachfolgend anhand eines Ausführungsbeispieles näher erläutert. Es zeigt:
- Figur 1: eine schematische Darstellung einer erfindungsgemäßen Datenverarbeitungsvorrichtung,
- Figur 2: ein Blockschaltbild einer Anordnung mit einer erfindungsgemäßen Chipkarte im Normalbetrieb und
- Figur 3: ein Blockschaltbild einer Anordnung mit einer erfindungsgemäßen Chipkarte bei der Neuprogrammierung.

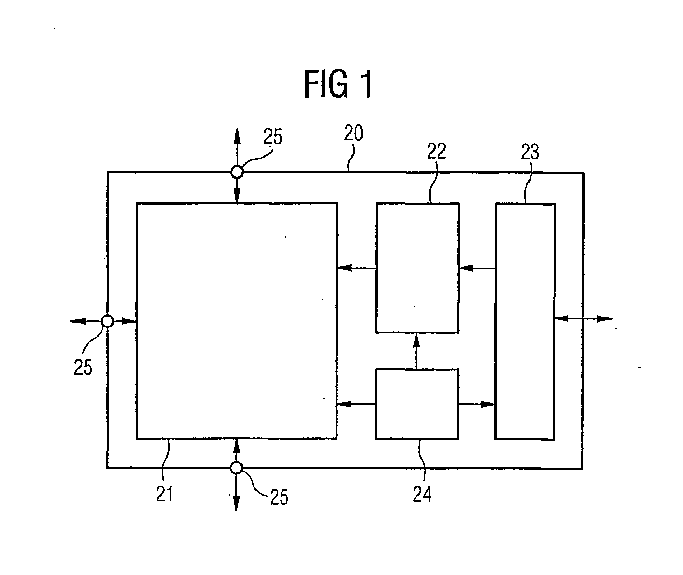

In der Figur 1 ist eine erfindungsgemäße Datenverarbeitungsvorrichtung 20 dargestellt, die eine funktionsprogrammierbare Logikschaltung 21 und eine Berechtigungskontrolleinheit 23 aufweist. Zur Programmierung bzw. Reprogrammierung der Logikschaltung 21 ist eine interne Programmierschnittstelle 22 vorgesehen. Der Zugriff auf diese Programmierschnittstelle ist durch die Berechtigungskontrolleinheit 23 gesichert. Nur wenn eine PIN richtig eingegeben wurde oder, bei Verwendung eines biometrischen Sensors, die biometrische Merkmale positiv mit in einem Speicher abgelegten Mustern verglichen wurden, kann ein Programmiervorgang ausgeführt werden.

Ein Unberechtigter könnte nun versuchen, durch eine hardwaretechnische Manipulation unter Umgehung der Berechtigungskontrolleinheit 23 direkten Zugriff zu der Programmierschnittstelle 22 zu erlangen. Daher ist zusätzlich eine Manipulationsdetektionsvorrichtung 24 vorgesehen, durch die eine solche Hardwareattacke erkennbar ist. Nachfolgend werden geeignete Reaktionen, beispielsweise eine Meldung an eine Zentrale oder die Löschung sicherheitsrelevanter Daten vorgenommen.

Während ein Programmiervorgang nur über die Berechtigungskontrolleinheit 23 erfolgen kann, sind die normalen Zugriffe auf die Funktionen der Logikschaltung über Schnittstellen 25 möglich. Genauso können Zusatzkomponenten unter Verwendung der Schnittstellen 25 direkt mit der Logikschaltung verbunden werden.

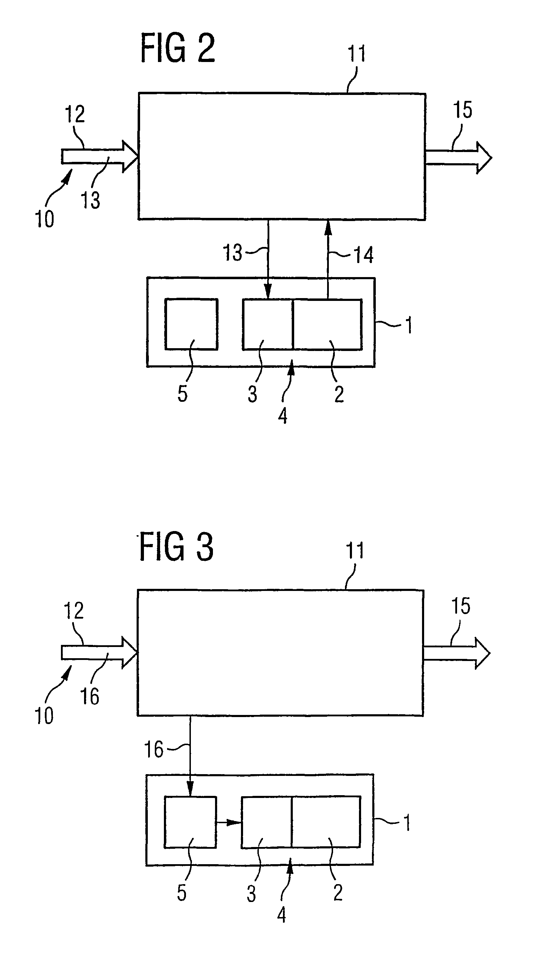

Eine exemplarische Anwendung einer erfindungsgemäßen Datenverarbeitungsvorrichtung in Form einer Chipkarte ist in der Figur 2 dargestellt. Dort erfolgt die Anwendung in Verbindung mit einem Decoder für Pay-TV-Anwendungen.

Die grundlegende Funktionsweise von Pay-TV-Anwendungen besteht darin, daß das Fernsehsignal so verschlüsselt ist, daß es vom Fernsehgerät nicht dargestellt werden kann. Die Entschlüsselung des Fernsehsignales erfolgt in einem Decoder, der als sogenannte Set-Top-Box bekannt ist. Um den Decoder für ein bestimmtes Programm benutzen zu können, muß der Benutzer eine Chipkarte besitzen, die von dem Anbieter gegen Bezahlung ausgegeben wird.

Zur technischen Realisierung wird in der Austastlücke des Fernsehsignales ein sogenanter Challenge-Wert übertragen und vom Decoder an die Chipkarte weitergeleitet. In der Chipkarte bzw. in dem darin enthaltenen Mikroprozessor wird ein kryptographischer Algorithmus unter Verwendung eines gespeicherten Schlüssels auf den Challenge-Wert angewandt und ein Response-Wert an den Decoder zurückgegeben. Dieser kann daraufhin eine Entschlüsselung des Fernsehsignales vornehmen. Bei dem Decoder handelt es sich meist um ein standardisiertes Gerät, so daß mehrere Pay-TV-Programme unter Verwendung verschiedener Chipkarten mit dem gleichen Decodergerät entschlüsselt werden können.

Da die Karten zur Entschlüsselung eines Fernsehprogrammes für alle Benutzer gleich sind, hat es sich für Angreifer als lukrativ erwiesen, die Chipkartenfunktionen mit Nachbildungen zu simulieren und zu verkaufen. Diese Nachbildungen verwenden herkömmliche Mikroprozessoren und sind oft mit großen Teilen der Originalsoftware der Pay-TV-Karten ausgestattet. Das technische Problem bei der Verhinderung von Nachbildungen rührt daher, daß alle Karten eines Systems funktional gleich sind und somit relativ einfach nachgebildet werden können.

Bisher wurde versucht, durch regelmäßiges Wechseln des kryptographischen Schlüssels die Lebensdauer eines illegalen Kartensimulators zu verkürzen. Neuere Simulatoren erlauben jedoch das Wechseln des Schlüssels über eine Tastatur oder über eine PC-Schnittstelle. Die neuen Schlüssel wiederum werden über das Internet verbreitet.

Ein weiterer Ansatz zur Verhinderung der Nachbildungen ist die Integration von kundenspezifischen Bausteinen (ASICs) als zweitem Chip auf dem Chipkartenmodul. Diese Bausteine können aber ebenfalls nach einem einmaligen Reverse Engineering Prozess in Hardware auf einem Simulator nachgebildet werden.

Die Probleme bezüglich des Einsatzes von Chipkarten bei Pay-TV-Anwendungen oder Telefonkarten sind in der Zeitschrift "A la card", Ausgabe 26-27/97, Seite 315 ff. genauer ausgeführt. Dort wird vorgeschlagen, die Chipkarten mit Kryptocoprozessoren auszustatten, um so einen Nachbau zu erschweren. Da deren Datendurchsatz hoch ist im Vergleich zu einer externen Logik, die zur Nachbildung deren Funktionen verwendet wird, kann ein Nachbau nur unter Verwendung ebenfalls eines Kryptocoprozessors erfolgen. Dies erschwert zwar den Nachbau, jedoch bleibt das verbotene Nachbilden aufgrund der hohen Stückzahlen lukrativ.

Die in der Figur 2 dargestellte erfindungsgemäße Chipkarte 1 zur Verwendung mit einem Pay-TV-Decoder weist einen Mikrocontroller 2 und eine funktionsprogrammierbare Hardwarekomponente 3, z.B. ein FPGA, auf. Der Mikrocontroller 2 bildet mit der funktionsprogrammierbaren Hardwarekomponente 3 eine Einheit 4. Zur Programmierung der funktionsprogrammierbaren Hardwarekomponente 3 ist zudem eine Programmiervorrichtung 5 vorgesehen. Im normalen Betrieb wird ein Fernsehsignal 10 an den Decoder 11 übertragen. Das Fernsehsignal 10 enthält sowohl ein Datensignal 12 für die Darstellung der Fernsehbilder als auch einen Challenge-Wert 13, der, wie eingangs beschrieben, an die Chipkarte weitergeleitet wird. Die Anwendung eines Kryptoalgorithmus auf den Challenge-Wert 13 durch den Mikrocontroller und/oder die funktionsprogrammierbare Hardwarekomponente liefert einen Response-Wert 14, der an den Decoder 11 zurückgegeben wird und es diesem ermöglicht, aufgrund einer Schlüsselfunktion des Response-Werts oder einer Bestimmung von Initialwerten, das Datensignal 12 zu decodieren und als Videosignal 15 an ein Fernsehgerät weiterzuleiten.

Die Figur 3 zeigt, wie eine Neuprogrammierung der funktionsprogrammierbaren Hardwarekomponente 3 erfolgt. In diesem Fall wird mit dem Datensignal 12 ein Programmierbefehl 16 in der Austastlücke übertragen, so daß es für den Benutzer unbemerkt bleibt. Der Decoder leitet den Programmierbefehl 16 an die Chipkarte weiter, wo daraufhin die Programmiervorrichtung 5 angesprochen wird, die die Reprogrammierung der funktionsprogrammierbaren Hardwarekomponente 3 vornimmt. Die Sendeanstalt hat nun die Möglichkeit, das Fernsehsignal anders zu verschlüsseln bzw. die Challenge-Werte zu verändern, so daß nur unter Anwendung der neu programmierten Funktion eine Decodierung möglich ist. Wenn der Reprogrammierungsvorgang häufig, beispielsweise jede Stunde, durchgeführt wird, ist es für Angreifer wenig praktikabel, jedesmal den neuen Algorithmus zu analysieren und ein FPGA entsprechend zu programmieren.

Zur direkten Nachbildung der Pay-TV-Chipkarte kann der Angreifer darüber hinaus auch keine handelsüblichen Mikrocontroller verwenden, sondern müßte ein Gesamt-Reverse-Engineering sowie eine Fabrikation der Einheit 4 mit dem Mikrocontroller 2 und der funktionsprogrammierbaren Hardwarekomponente 3 starten.

Die Anwendung der erfindungsgemäßen Datenverarbeitungsvorrichtung ist natürlich nicht auf Pay-TV-Anwendungen beschränkt, sondern kann auf alle Systeme angewandt werden, in denen hohe Anforderungen an Programmierbarkeit und Sicherheit gefordert werden.

### Bezugszeichenliste

- 1: Chipkarte
- 2: Mikrocontroller
- 3: funktionsprogrammierbare Logikschaltung
- 4: Einheit
- 5: Programmiervorrichtung
- 10: Fernsehsignal
- 11: Decoder
- 12: Datensignal
- 13: Challenge-Wert
- 14: Response-Wert
- 15: Videosignal
- 16: Steuerbefehl
- 20: Datenverarbeitungsvorrichtung
- 21: funktionsprogrammierbare Logikschaltung
- 22: Programmierschnittstelle
- 23: Berechtigungskontrolleinheit
- 24: Manipulationsdetektionsvorrichtung
- 25: Schnittstellen

## Patentansprüche

1. Datenverarbeitungsvorrichtung mit einer funktionsprogrammierbaren Logikschaltung (3; 21) mit
- einer Programmierschnittstelle (5; 22) und
- einer Berechtigungskontrolleinheit (2; 23), durch die die Programmierschnittstelle (5; 22) vor einem unberechtigten Zugriff geschützt ist,
**dadurch gekennzeichnet, dass**
ein Programmierbefehl (16) vorgesehen ist, der mit einem Datensignal (12) in einer Austastlücke an die Programmierschnittstelle (5; 22) übertragbar ist, um eine Reprogrammierung der funktionsprogrammierbaren Logikschaltung (3; 21) durchzuführen.

2. Datenverarbeitungsvorrichtung nach Anspruch 1,
**dadurch gekennzeichnet , daß** durch die funktionsprogrammierbare Logikschaltung (3; 21) ein Kryptoalgorithmus ausgeführt wird.

3. Datenverarbeitungsvorrichtung nach Anspruch 1 oder 2, **dadurch gekennzeichnet, daß** eine Manipulationsdetektionsvorrichtung (24) vorgesehen ist, durch die Manipulationen an der funktionsprogammierbaren Logikschaltung (21), der Berechtigungskontrolleinheit (23) und der Programmierschnittstelle (22) feststellbar sind.

4. Datenverarbeitungsvorrichtung nach Anspruch 1,
**dadurch gekennzeichnet, daß** die Berechtigungskontrolleinheit (2; 23) in einem Mikroprozessor realisiert ist, der auch für andere Aufgaben als die Berechtigungskontrolle einsetzbar ist.

## Claims

1. Data processing device with a functionally programmable logic circuit (3; 21) with
- a programming interface (5; 22) and
- an authorization control unit (2; 23) which protects the programming interface (5; 22) against an unauthorized access,
**characterized in that**
provision is made of a programming command (16) which, together with a data signal (12), can be transmitted in a blanking interval to the programming interface (5; 22) in order to reprogram the functionally programmable logic circuit (3; 21).

2. Data processing device according to Claim 1,
**characterized in that** a crypto-algorithm is executed by the functionally programmable logic circuit (3; 21).

3. Data processing device according to Claim 1 or 2,
**characterized in that** a manipulation detection device (24) is provided, which can detect manipulations on the functionally programmable logic circuit (21), the authorization control unit (23) and the programming interface (22).

4. Data processing device according to Claim 1,
**characterized in that** the authorization control unit (2; 23) is realized in a microprocessor which can also be used for tasks other than authorization control.

## Revendications

1. Dispositif de traitement de données ayant un circuit logique à fonction programmable ( 3 ; 21) comprenant
- une interface de programmation ( 5 ; 22) et
- une unité de contrôle d'autorisation ( 2 ; 23 ) par laquelle l'interface de programmation ( 5 ; 22 ) est protégée contre un accès non autorisé,
**caractérisé par le fait qu'**il est prévu une instruction de programmation ( 16 ) qui peut être transmise avec un signal de données ( 12 ) dans un intervalle de suppression à l'interface de programmation ( 5 ; 22 ) pour effectuer une reprogrammation du circuit logique à fonction programmable ( 3 ; 21 ).

2. Dispositif de traitement de données selon la revendication 1,
**caractérisé par le fait qu'**un algorithme cryptographique est réalisé par le circuit logique à fonction programmable ( 3 ; 21 ).

3. Dispositif de traitement de données selon la revendication 1 ou 2,
**caractérisé par le fait qu'**il est prévu un dispositif de détection de manipulation ( 24 ) par lequel des manipulations réalisées sur le circuit logique à fonction programmable ( 21), sur l'unité de contrôle d'autorisation ( 23 ) et sur l'interface de programmation ( 22 ), peuvent être détectées.

4. Dispositif de traitement de données selon la revendication 1,
**caractérisé par le fait que** l'unité de contrôle d'autorisation ( 2 ; 23 ) est réalisée dans un microprocesseur qui peut aussi être utilisé pour d'autres tâches que le contrôle d'autorisation.
